# FASCICULE DE BREVET EUROPEEN

(11) **EP 2 618 675 B1**
(45) Date de publication et mention de la délivrance du brevet: **12.04.2017**
(21) Numéro de dépôt: 11773496.2
(22) Date de dépôt: 14.09.2011
(51) Int. Cl.: A23B 7/144, B05B 7/16

(54) **DISPOSITIF DE THERMONÉBULISATION D'UN LIQUIDE ET PROCÉDÉ ASSOCIÉ**
THERMISCHE VERNEBELUNGSVORRICHTUNG MIT EINER FLÜSSIGKEIT UND ZUGEHÖRIGES VERFAHREN
THERMAL FOGGING DEVICE USING A LIQUID, AND RELATED METHOD

(30) Priorité: 22.09.2010 FR 1057624
(43) Date de publication de la demande: 31.07.2013
(73) Titulaire: Xeda International, 13670 Saint Andiol (FR)
(72) Inventeur: SARDO, Stéfano, F-13160 Chateaurenard (FR); SARDO, Alberto, F-13160 Chateaurenard (FR)
(74) Mandataire: Lavoix
(86) Numéro de dépôt international: PCT/FR2011/052097
(87) Numéro de publication internationale: WO 2012/038640

(56) Documents cités:
- WO-A1-92/15823
- FR-A1- 2 938 458
- US-A- 2 101 922

## Description

L'invention concerne en général la thermonébulisation des liquides, et notamment la thermonébulisation de compositions liquides de traitement sur des fruits et légumes.

Plus précisément, l'invention concerne selon un premier aspect un dispositif de thermonébulisation d'un liquide, comportant :
- un ensemble de production d'un flux de gaz chaud sous pression, présentant notamment une sortie de gaz chaud,
- un conduit d'éjection, présentant notamment une entrée de gaz chaud raccordée à la sortie de gaz chaud de l'ensemble de production, et une sortie d'éjection d'un brouillard de liquide,
- une première source de liquide,
- des moyens pour injecter dans le conduit d'éjection un flux dosé de liquide à partir de la première source de liquide.

Un tel dispositif est connu de FR 2 566 681, qui décrit que le liquide est injecté dans le conduit d'éjection par une pompe aspirant ce liquide dans un réservoir. Le flux de gaz est constitué par de l'air, chauffé par une résistance électrique.

Un tel dispositif présente cependant plusieurs problèmes qui nuisent au bon fonctionnement du dispositif et à l'efficacité de la thermonébulisation. L'usure des engrenages de la pompe ou les variations éventuelles de la tension électrique alimentant la pompe peuvent par exemple entraîner des fluctuations du débit de liquide aspiré. Ces différences de débit perturbent le bon fonctionnement du dispositif de thermonébulisation, et peuvent même être à l'origine de risques d'incendies. Par ailleurs, la pompe présente généralement une mauvaise résistance à l'utilisation de solvants organiques destinés à être pulvérisés sur les fruits et/ou légumes, ces solvants pouvant en particulier attaquer les engrenages en plastique de la pompe, et surtout les joints. Enfin, l'utilisation d'une pompe nécessite de déterminer un point d'injection précis du liquide dans le flux de gaz chaud sous pression, ce qui ne permet pas d'obtenir une dispersion optimale du liquide dans un tel flux de gaz chaud.

FR 2 938 458 décrit un dispositif de thermonébulisation selon le préambule de la revendication 1.

WO92/15823 décrit un dispositif générateur de fumée dans lequel la température des gaz est contrôlée en pilotant un organe de chauffage.

US 2101922 décrit un dispositif de projection dans lequel la température des gaz est elle-aussi contrôlée en pilotant un organe de chauffage.

Dans ce contexte, l'invention vise à augmenter la fiabilité et l'efficacité d'un dispositif de thermonébulisation du type précité, afin de remédier aux inconvénients mentionnés ci-dessus.

A cette fin, l'invention porte sur un dispositif de thermonébulisation selon la revendication 1.

Le dispositif peut également présenter une ou plusieurs des caractéristiques définies dans les revendications dépendantes, considérées individuellement ou selon toutes les combinaisons techniquement possibles.

Selon un second aspect, l'invention concerne un procédé de thermonébulisation d'un liquide, selon la revendication 9.

D'autres caractéristiques et avantages de l'invention ressortiront de la description qui en est donnée ci-dessous, à titre indicatif et nullement limitatif, en référence aux figures annexées, parmi lesquelles :
- la figure 1 est une représentation schématique simplifiée d'un dispositif de thermonébulisation conforme à un premier mode de réalisation de l'invention,
- la figure 2 est une vue agrandie de la zone II de la figure 1,
- la figure 3 est une représentation similaire à celle de la figure 1, pour un second mode de réalisation de l'invention,
- la figure 4 est une vue agrandie de la zone IV de la figure 3, et
- la figure 5 est une représentation schématique et partielle d'une variante de réalisation d'un dispositif de thermonébulisation conforme à l'invention.

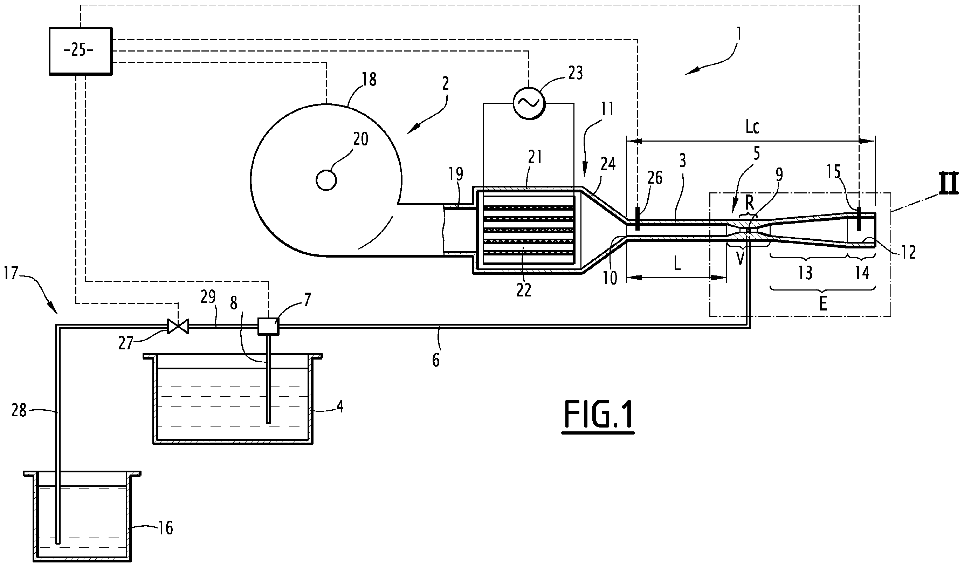

Le dispositif représenté sur la figure 1 est un dispositif de thermonébulisation destiné à produire un flux de gaz comportant un brouillard de liquide. Le brouillard de liquide comporte de très fines gouttelettes, au moins 90% des gouttelettes de préférence présentant un diamètre inférieur ou égal à 3 microns.

Un tel dispositif est typiquement prévu pour le traitement des fruits et légumes stockés dans des enceintes fermées, notamment des serres ou des enceintes de stockage.

Le liquide constituant le brouillard est typiquement une solution aqueuse comportant un agent chimique adapté pour le traitement des fruits et légumes. Cet agent chimique a par exemple une activité protectrice destinée à prolonger la conservation des fruits et légumes. Il peut présenter un effet antioxydant, un effet anti-germinatif et/ou un effet fongicide. De telles compositions sont décrites dans les demandes FR 2 728 142, FR 2 786 664 et FR 2 791 910.

Le dispositif de thermonébulisation 1 comporte :
- un ensemble 2 de production d'un flux de gaz chaud sous pression ;
- un conduit d'éjection 3 ;
- une première source 4 d'un liquide contenant un agent chimique de traitement ;
- des moyens 5 pour fournir au conduit d'éjection un flux dosé de liquide à partir de la première source 4.

Les moyens 5 pour fournir au conduit d'éjection un flux dosé de liquide comportent un dispositif venturi V qui présente une zone de section rétrécie R permettant l'aspiration du flux dosé de liquide. Les moyens 5 comportent encore un conduit d'aspiration 6, un organe de vanne 7, notamment une vanne trois voies, et un conduit de prélèvement 8. Le conduit d'aspiration 6 raccorde une première sortie de la vanne 7 à une entrée de liquide 9 débouchant dans la zone de section rétrécie R du dispositif venturi V. Par ailleurs, le conduit de prélèvement 8 raccorde une seconde sortie de la vanne 7 au réservoir 4.

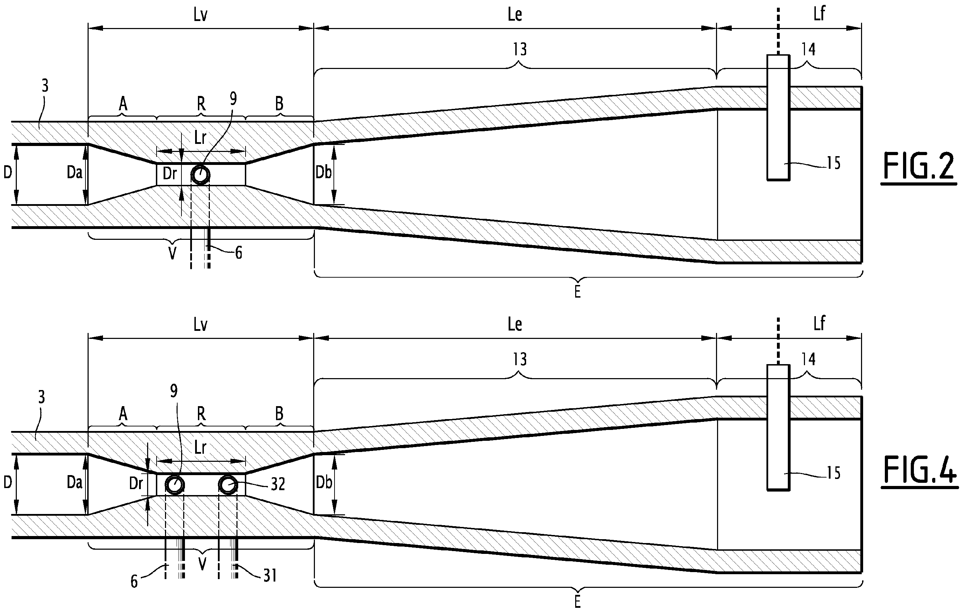

Comme on peut le voir plus précisément sur la figure 2, le dispositif venturi V comporte un convergent A en amont de la zone de section rétrécie R et un divergent B en aval de la zone de section rétrécie R. En variante, le dispositif venturi V ne comporte pas de divergent B. Les termes « amont » et « aval » doivent être compris relativement au sens d'écoulement du flux de gaz chaud dans le conduit d'éjection 3, de la gauche vers la droite sur la figure 1.

Le dispositif venturi V est avantageusement logé dans le conduit d'éjection 3. Dans cet exemple en particulier, le dispositif venturi V est formé par modification de l'épaisseur de la paroi du conduit d'éjection 3, de manière à pouvoir former le convergent A, la zone de section rétrécie R et le divergent B. En variante, la paroi du conduit d'éjection 3 présente une épaisseur constante.

Le diamètre D du conduit d'éjection 3 en amont du dispositif venturi V est par exemple compris entre 12 et 25 mm, de préférence entre 15 et 20 mm, et encore de préférence entre 16 et 18 mm.

Le diamètre Da du dispositif venturi V à l'entrée du convergent A est par exemple compris entre 12 et 25 mm, de préférence entre 15 et 20 mm, et encore de préférence entre 16 et 18 mm.

Le diamètre Db du dispositif venturi V à la sortie du divergent B est par exemple compris entre 12 et 25 mm, de préférence entre 15 et 20 mm, et encore de préférence entre 16 et 18 mm.

Les diamètres D, Da et Db peuvent avoir des valeurs toutes identiques ou toutes différentes. En variante, deux seulement peuvent avoir des valeurs identiques, le troisième ayant une valeur différente.

La longueur Lc du conduit d'éjection 3 est par exemple comprise entre 200 et 2500 mm, par exemple comprise entre 200 et 1500 mm. La Longueur Lv du dispositif venturi V est par exemple comprise entre 100 et 500 mm. La longueur L du conduit d'éjection 3 en amont du dispositif venturi V est par exemple inférieure à 500 mm, par exemple comprise entre 100 et 500 mm.

Le diamètre Dr de la zone de section rétrécie R du dispositif venturi V est par exemple compris entre 1 et 20 mm, et la longueur Lr de la zone de section rétrécie R est par exemple comprise entre 5 et 100 mm.

Le conduit d'éjection 3 est un conduit sensiblement cylindrique. Il est ouvert à ses deux extrémités. L'une des extrémités définit une entrée de gaz chaud raccordée à la sortie 10 de l'organe de chauffage 11 décrit ci-après. L'extrémité opposée définit une sortie d'éjection 12 d'un flux de gaz chaud chargé d'un brouillard de liquide.

Le débit d'injection de liquide en provenance de la première source de liquide 4 à l'entrée 9 du conduit 3 est généralement compris entre 5 et 100 litres par heure, de préférence entre 10 et 30 litres par heure, et encore de préférence entre 13 et 20 litres par heure. La température du liquide injecté dans le conduit 3 est généralement comprise entre 0 et 50°C, de préférence entre 10 et 25°C, et encore de préférence entre 20 et 25°C.

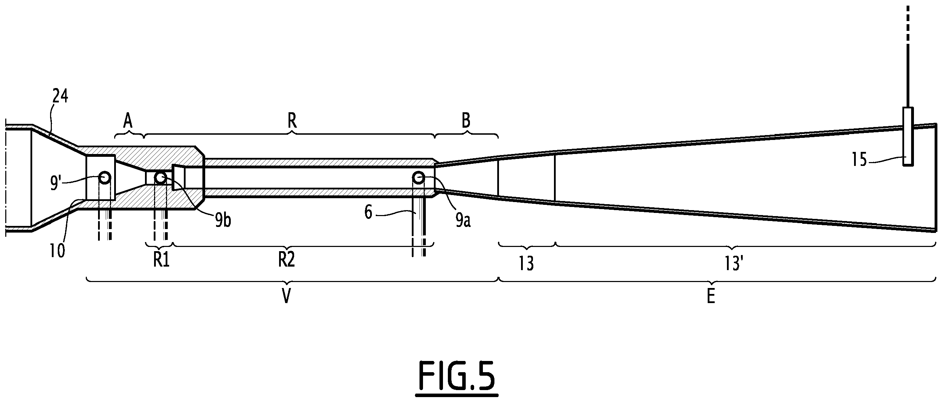

Le conduit d'éjection 3 comporte encore une partie évasée E en aval du dispositif venturi V. La partie évasée E comporte par exemple un divergent 13 et une partie rectiligne 14. En variante, la partie évasée E ne comporte pas de partie rectiligne 14, comme on peut le voir sur la figure 5.

Le diamètre De à la sortie du divergent 13 est par exemple compris entre 15 et 250 mm. La longueur Le du divergent 13 est par exemple comprise entre 250 et 2000 mm. La longueur Lf de la partie rectiligne 14 est par exemple inférieure à 1000 mm, par exemple comprise entre 100 et 1000 mm, étant par exemple égale à environ 150 mm.

Le dispositif de thermonébulisation 1 comporte encore des éléments constitutifs d'un système de sécurité du type de celui décrit dans la demande FR 2 938 458, à savoir:
- une sonde 15 pour détecter une interruption totale ou partielle du flux dosé de liquide arrivant de la première source 4 de liquide ;
- une seconde source 16 de liquide ;
- des moyens 17 pour fournir au conduit d'éjection 3 un flux de secours de liquide à partir de la seconde source 16 de liquide quand la sonde 15 détecte une interruption totale ou partielle du flux dosé de liquide arrivant de la première source de liquide 4.

L'ensemble de production 2 comporte une soufflante 18 et un organe de chauffage 11. La soufflante 18 présente une entrée d'aspiration d'air atmosphérique (non représentée) et une sortie 19 de refoulement d'air sous pression. L'arbre 20 de la soufflante 18 est entraîné par un moteur électrique non représenté.

L'organe de chauffage 11 comporte une enveloppe 21, une résistance chauffante 22 et un générateur électrique 23 raccordé électriquement à la résistance 22. La résistance 22 est située à l'intérieur de l'enveloppe 21. L'enveloppe 21 présente une entrée de gaz froid raccordée à la sortie 19 de refoulement de la soufflante, et un tronçon convergent 24 définissant une sortie de gaz chaud sous pression 10. Le générateur électrique 23 peut faire bloc unique avec la soufflante 18, constituant ainsi la partie au sol du dispositif de thermonébulisation 1.

La première source de liquide 4 est typiquement un réservoir rempli de liquide de traitement. Ce liquide est typiquement une solution d'un agent chimique de traitement, dans l'eau, un solvant organique ou une huile essentielle pure.

La sonde 15 est placée dans le conduit d'éjection 3, en aval de l'entrée de liquide 9. Elle est de préférence placée à proximité de la sortie d'éjection 12, par exemple dans la partie rectiligne 14 de la partie évasée E. Elle renseigne un calculateur 25.

La sonde 15 est une sonde de température qui mesure la température du brouillard de liquide au niveau de la sortie d'éjection 12. La vanne 7 est commandée automatiquement par le calculateur 25 pour être au moins partiellement fermée lorsque la température mesurée par la sonde 15 est inférieure à une température prédéterminée souhaitée, afin de réduire le débit de liquide aspiré du réservoir 4 et d'augmenter la température du brouillard de liquide à la sortie d'éjection 12.

De même, la vanne 7 est commandée automatiquement par le calculateur 25 pour être au moins partiellement ouverte lorsque la température de la sonde 15 est supérieure à la température prédéterminée souhaitée, afin d'augmenter le débit de liquide aspiré du réservoir 4 et de diminuer la température du brouillard de liquide à la sortie d'éjection 12.

Une sonde de température 26 est également placée à proximité de la sortie de gaz chaud sous pression 10, afin de contrôler la température à la sortie de la résistance électrique 22.

La seconde source 16 de liquide est par exemple un réservoir rempli avec de l'eau. Cette eau ne comporte pas d'agent de traitement chimique.

Les moyens 17 pour fournir à l'entrée de liquide 9 un flux de secours à partir de la seconde source 16 de liquide comportent une électrovanne 27, pouvant avantageusement être remplacée par deux valves qui se ferment et s'ouvrent alternativement, un tuyau d'aspiration 28 raccordé à la seconde source 16 de liquide, et un tronçon de liaison 29 raccordé à une troisième sortie de la vanne trois voies 7 des moyens 5 pour fournir au conduit d'éjection un flux dosé de liquide. L'électrovanne 27 est intercalée entre le tuyau d'aspiration 28 et le tronçon de liaison 29.

Le calculateur 25 est raccordé aux sondes de température 15 et 26, au générateur électrique 23, au moteur de la soufflante 18 et aux vannes 7 et 27. Le calculateur 25 est apte à piloter chacun de ces éléments ou à recevoir des informations de ceux-ci.

La soufflante 18 présente entre le refoulement et l'aspiration une différence de pression comprise entre 0,1 10⁵ Pa et 1 10⁵ Pa, de préférence comprise entre 0,20 10⁵ Pa et 0,50 10⁵ Pa. Le débit de la soufflante varie entre 20 et 100 Nm³/h, de préférence entre 40 et 70 Nm³/h, étant par exemple égale à 60 Nm³/h. Ainsi, la vitesse linéaire de l'air chaud à l'entrée du conduit d'éjection 5 est comprise entre 160 et 400 m/s, de préférence entre 200 et 280 m/s. La résistance électrique 22 est dimensionnée pour être capable de chauffer l'air à une température comprise entre 400 et 700°C à l'entrée du conduit d'éjection 3. De préférence, la résistance électrique 22 est dimensionnée pour chauffer l'air à une température comprise entre 450 et 650°C, et encore plus de préférence entre 500 et 600°C. La puissance électrique de la résistance est comprise entre 2et 20 kW, et vaut de préférence entre 7,5 et 15 kW.

A la sortie d'éjection du conduit 3, le brouillard de liquide comporte des gouttelettes présentant une température comprise entre 170 et 240°C, animées d'une vitesse linéaire comprise entre 110 et 140 m/s. De manière à satisfaire ces conditions, il est possible de modifier, outre les paramètres décrits ci-dessus :
- les dimensions des longueurs des éléments du conduit 3 ;
- les dimensions des diamètres des éléments du conduit 3 ;
- le débit et la température du liquide aspiré à l'entrée 9 du conduit 3.

Dans un exemple de réalisation, la soufflante 18 fournit une différence de pression entre l'aspiration et le refoulement valant 25 000 Pascal, et un débit de 60 Nm³/h. Le conduit 3 présente en amont du dispositif venturi V un diamètre D de 18 mm et une longueur Lc de 800 mm. La résistance électrique 22 présente une puissance électrique de 10 kW. La température de l'air chaud à l'entrée du conduit 3 est d'environ 600°C. La vitesse linéaire de l'air chaud à l'entrée du conduit 3 est d'environ 220 m/s. Le liquide est aspiré à l'entrée 9 du conduit 3 à un débit de 15 litres par heure, et à une température de 20 à 25°C. On obtient à la sortie d'éjection 12 du conduit un brouillard de gouttelettes dont le diamètre moyen est de 0,4 microns. La vitesse linéaire des gouttelettes en sortie du conduit 3 est de 125 m/s et la température des gouttelettes est d'environ comprise entre environ 170 à 240 C°, en fonction du produit.

Le fonctionnement du dispositif de thermonébulisation 1 ci-dessus va maintenant être décrit.

Au démarrage, le calculateur 25 commande à la vanne 7 d'isoler le tronçon de liaison 29 et de mettre en communication le conduit d'aspiration 6 et le conduit de prélèvement 8. Le calculateur 25 commande le démarrage de la soufflante 18 et l'alimentation électrique de la résistance 22. La soufflante 18 aspire l'air atmosphérique et le refoule à travers l'organe de chauffage 11 jusqu'au conduit 3. Le dispositif venturi V aspire la solution de traitement dans le réservoir 4 par l'intermédiaire du conduit d'aspiration 6 sous l'effet de la réduction de la vitesse d'écoulement du flux de gaz chaud dans la zone de section rétrécie R du dispositif venturi V. Le liquide du réservoir 4 aspiré par le dispositif venturi V est injecté dans le flux de gaz chaud à plus de 600°C provenant de l'organe de chauffage. Le liquide est dispersé dans le flux de gaz chaud et fractionné en très fines gouttelettes. Une partie du liquide est éventuellement vaporisée. Sous l'effet de l'injection de liquide, le flux de gaz est refroidit, sa température passant d'environ 625°C à environ 170-240°C.

Le calculateur 25 surveille en permanence la température du flux de gaz chargé du brouillard de liquide en aval de l'entrée 9, au niveau de la sortie d'éjection 12, par l'intermédiaire de la sonde 15. Le calculateur 25 commande automatiquement l'ouverture ou la fermeture au moins partielle de la vanne 7 en cas, respectivement, de dépassement ou de baisse de la température mesurée par la sonde 15 par rapport à une température prédéterminée souhaitée.

Par ailleurs, si le flux de liquide arrivant du réservoir 4 s'interrompt totalement ou partiellement, la température mesurée par la sonde 15 augmente. Cette interruption résulte par exemple du fait que le réservoir 4 est vide, tout le liquide ayant déjà été injecté dans le conduit 3. Cette interruption peut également résulter du fait que le conduit de prélèvement 8 est bouché, totalement ou partiellement. Du fait que le liquide est injecté en plus faible quantité, ou n'est plus injecté du tout dans le conduit 3, le flux de gaz n'est plus refroidit de la même façon, et la température du flux de gaz augmente au niveau de la sonde 15.

Quand le calculateur 25 détecte que la température mesurée par la sonde 15 dépasse une valeur cible maximum, par exemple 400°C, le calculateur 25 commande à la vanne trois voies 7 d'isoler le conduit de prélèvement 8 et commande à l'électrovanne 27 de mettre en communication le tronçon de liaison 29 avec le tuyau d'aspiration 28.

Ainsi, le dispositif venturi V aspire l'eau contenue dans la seconde source de liquide 16, induisant une forte baisse de température à cause de l'évaporation.

La reprise de l'injection de liquide à l'intérieur du conduit 3 provoque un rétablissement des conditions de régime et les gaz sont de nouveau ramenés à une température d'environ 170-240°C.

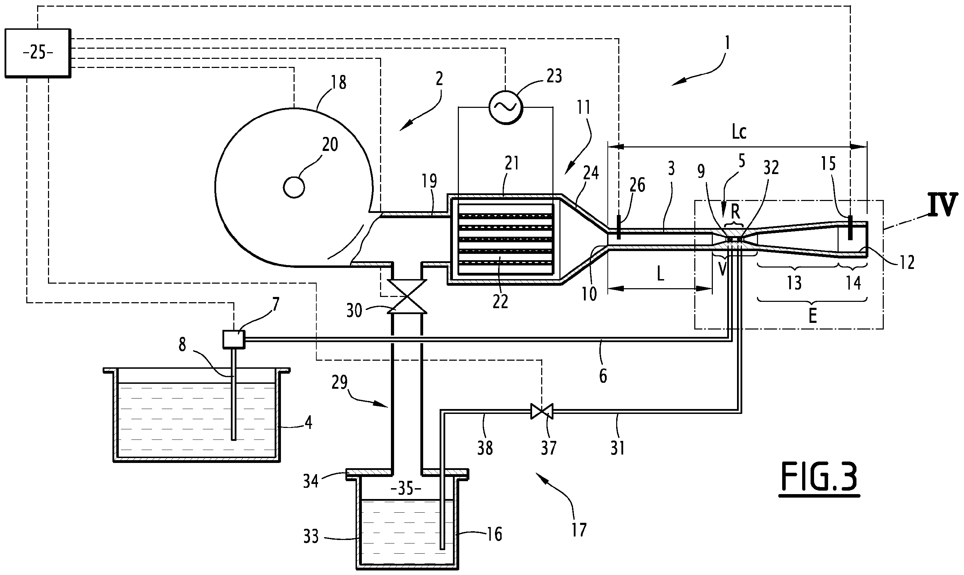

Un second mode de réalisation de l'invention va maintenant être décrit, en référence aux figures 3 et 4. Seuls les points par lesquels ce second mode de réalisation diffère du premier sont détaillés ci-dessous.

Les éléments identiques, ou assurant la même fonction, sont désignés par les mêmes références dans les deux modes de réalisation.

Les moyens 17 pour fournir au conduit d'éjection 3 un flux de secours de liquide à partir de la seconde source 16 de liquide comportent dans le second mode de réalisation un conduit 29 de mise sous pression du réservoir 16, une électrovanne 30 intercalée sur le conduit 29, un conduit de liaison 38 raccordant le réservoir 16 à un organe de vanne 37, et un conduit d'injection 31 raccordant l'organe de vanne 37 à une seconde entrée de liquide 32 du conduit d'éjection 3.

Le conduit 29 raccorde le refoulement de la soufflante 18 au ciel du réservoir 16. Ainsi, une extrémité amont du conduit 29 est raccordée à la sortie de refoulement 19 de la soufflante. L'extrémité avale du conduit 29 débouche dans le ciel du réservoir 16.

L'électrovanne 30 est une vanne tout ou rien, commandée par le calculateur 25. Elle est susceptible d'autoriser ou d'interdire la circulation d'air depuis le refoulement de la soufflante jusqu'au ciel du réservoir 16.

Dans ce second mode de réalisation, le réservoir 16 est un réservoir étanche à l'air. Il comporte par exemple une cuve 33 ouverte vers le haut, et un couvercle 34 permettant d'obturer la cuve 33. Des moyens d'étanchéité sont prévus entre le couvercle et la cuve, prévus pour empêcher les fuites d'air quand le réservoir 16 est maintenu à une pression au moins égale à la pression de refoulement de la soufflante 18. Le conduit 29 est piqué sur le couvercle 34. Par exemple, l'extrémité du conduit 29 est soudée sur le couvercle 34.

Une extrémité amont du conduit de liaison 38 traverse le couvercle 34 et plonge dans l'eau contenue dans le réservoir 16. Une étanchéité est réalisée entre le conduit 38 et le couvercle 34. Cette étanchéité est par exemple réalisée par soudure du conduit 38 sur le couvercle 34. Alternativement, une garniture d'étanchéité est interposée entre le conduit 38 et le couvercle 34.

Le réservoir 16 est partiellement rempli d'eau, la partie supérieure 35 du réservoir, encore appelée ciel, étant normalement remplie d'air.

La seconde entrée de liquide 32 débouche dans la zone de section rétrécie R du dispositif venturi V, à proximité de la première entrée 9, la zone de section rétrécie R permettant l'aspiration du flux dosé de liquide provenant du réservoir 16.

Le fonctionnement du dispositif de thermonébulisation 1 conforme au second mode de réalisation de l'invention va maintenant être décrit.

Le démarrage est similaire à celui du dispositif conforme au premier mode de réalisation de l'invention, à l'exception du fait que le calculateur 25 commande à l'électrovanne 30 d'obturer le conduit de mise sous pression 29 et à la vanne 37 d'obturer le conduit de liaison 38. Les vannes 30 et 37 sont maintenues fermées pendant le fonctionnement normal du dispositif de thermonébulisation, c'est-à-dire tant que le calculateur 25 ne détecte pas que la température mesurée par la sonde 15 dépasse la valeur maximale prédéterminée.

Quand le calculateur 25 au contraire détecte que la température mesurée par la sonde 15 dépasse ladite valeur maximum, il commande l'ouverture de l'électrovanne 30 et l'ouverture de la vanne 37.

Le ciel 35 du réservoir 16 est alors mis en communication avec le refoulement de la soufflante 18. De ce fait, le liquide contenu est mis sous pression, puisque la pression régnant alors dans le ciel 35 correspond à la pression de refoulement de la soufflante 18.

L'eau contenue dans le réservoir 16 est refoulée par la pression vers le conduit de liaison 38 et le conduit d'injection 31. Cette eau est injectée dans le conduit 3 par la seconde entrée de liquide 32.

Il est à noter que la pression de l'air à l'intérieur du conduit d'éjection 3 est inférieure à la pression d'air à la sortie de refoulement 19 de la soufflante, du fait de la perte de charge se produisant dans l'organe de chauffage. Ainsi, la pression dans le ciel du réservoir 16 est supérieure à la pression à l'intérieur du conduit d'éjection 3. La section de passage du conduit de liaison 38, et éventuellement celle du conduit d'injection 31, est dimensionnée pour que cette différence de pression permette un débit de liquide suffisant pour le refroidissement du flux de gaz chaud entrant dans le conduit 3.

En cas de dépassement d'une température maximale prédéterminée, mesurée par la sonde 15, le calculateur peut également commander l'ouverture de la vanne 37, tout en maintenant l'électrovanne 30 fermée, le liquide étant alors aspiré depuis le réservoir 16 au travers des conduits 38 et 31 par effet venturi, afin de diminuer la température à la sortie d'éjection 12.

Une variante de réalisation d'un dispositif de thermonébulisation conforme à l'invention va maintenant être décrit, en référence à la figure 5. Seuls les points par lesquels cette variante de réalisation diffère des premier et second modes de réalisation sont détaillés ci-dessous.

Les éléments identiques, ou assurant la même fonction, sont désignés par les mêmes références.

Le dispositif venturi V comporte une zone de section rétrécie R qui présente en sortie une entrée liquide 9a à laquelle est relié le conduit d'aspiration 6 du liquide provenant du réservoir 4.

La zone de section rétrécie R est formée de deux parties R1 et R2, la partie R1 étant située en amont de la partie R2 et présentant un diamètre inférieur à la partie R2. Une entrée de liquide 9b est prévue dans le conduit d'éjection 3 pour déboucher dans la zone de section rétrécie R au niveau de sa partie R1. L'entrée de liquide 9b est, le cas échéant, reliée à un conduit d'aspiration du liquide provenant du réservoir 4 ou du liquide provenant de la seconde source de liquide 16.

La partie du conduit d'éjection 3 située en amont du dispositif venturi V comporte une entrée de liquide 9'. L'entrée de liquide 9' permet par exemple de raccorder un conduit d'entrée de liquide, provenant par exemple du réservoir 4, le liquide étant par exemple injecté à l'aide d'une pompe.

La partie évasée E comporte une premier divergeant 13 et un deuxième divergeant 13', situé en aval du premier divergeant 13, la sonde de température 15 étant placée au niveau de la sortie du deuxième divergeant 13'.

Le dispositif de thermonébulisation 1 décrit ci-dessus présente de multiples avantages.

Du fait de l'utilisation de l'effet venturi pour aspirer le liquide et l'injecter dans le conduit d'éjection 3, le dispositif de thermonébulisation 1 selon l'invention ne nécessite pas l'utilisation d'un organe doseur de liquide, notamment une pompe, comme enseigné par l'art antérieur. L'invention permet donc d'éviter les problèmes de fluctuations de débit du liquide injecté, d'augmenter la fiabilité du dispositif et de réduire les coûts de conception et d'entretien. En outre, l'aspiration du liquide par effet venturi permet d'obtenir une homogénéisation optimale du liquide aspiré dans le flux de gaz chaud, augmentant ainsi la qualité du brouillard de liquide obtenu en sortie du conduit d'éjection 3.

La partie évasée E qui présente un divergent 13 de diamètre De en sortie supérieur au diamètre Db en sortie du divergent B du dispositif venturi V, permet avantageusement de diminuer la vitesse du fluide sortant du dispositif venturi V. Ainsi, les gouttelettes de plus grosses tailles du brouillard de liquide, non souhaitables pour la thermonébulisation, peuvent tomber sous l'effet de la gravité à la sortie 12 du conduit d'éjection 3.

Le dispositif de thermonébulisation peut présenter de multiples variantes, notamment telles que celles décrites dans la demande FR 2 938 458.

## Revendications

1. Dispositif (1) de thermonébulisation d'un liquide, le dispositif comportant :
- un ensemble (2) de production d'un flux de gaz chaud sous pression, présentant une sortie de gaz chaud (10),
- un conduit d'éjection (3), présentant une entrée de gaz chaud raccordée à la sortie de gaz chaud (10) de l'ensemble de production (2), et une sortie d'éjection (12) d'un brouillard de liquide,
- une première source de liquide (4),
- des moyens (5) pour injecter dans le conduit d'éjection (3) un flux dosé de liquide à partir de la première source de liquide (4), les moyens (5) pour fournir au conduit d'éjection (3) le flux dosé de liquide comportant un conduit d'aspiration (6), une vanne (7), et un conduit de prélèvement (8),
**caractérisé en ce que** les moyens (5) pour injecter le flux dosé de liquide comportent un dispositif venturi (V) présentant une zone de section rétrécie (R) permettant l'aspiration du flux dosé de liquide, le conduit d'aspiration (6) raccordant une première sortie de la vanne (7) à une entrée de liquide (9) débouchant dans la zone de section rétrécie (R) du dispositif venturi (V) et le conduit de prélèvement (8) raccordant une seconde sortie de la vanne à la première source de liquide (4), le dispositif de thermonébulisation comprenant en outre une sonde de température (15) apte à mesurer la température courante des gaz dans le conduit d'éjection (3) et un calculateur (25) apte à recueillir la température courante des gaz mesurée par la sonde (15) et à commander automatiquement l'ouverture ou la fermeture au moins partielle de la vanne (7) en cas respectivement de dépassement ou de baisse de la température mesurée par la sonde (15) par rapport à une température prédéterminée souhaitée.

2. Dispositif selon la revendication 1, **caractérisé en ce que** le dispositif venturi (V) comporte un convergent (A) en amont de la zone de section rétrécie (R) et un divergent (B) en aval de la zone de section rétrécie (R), en considérant le sens de circulation du flux de gaz chaud dans le conduit d'éjection (3).

3. Dispositif selon la revendication 1 ou 2, **caractérisé en ce que** le diamètre (D) du conduit d'éjection (3) en amont du dispositif venturi (V) est compris entre 12 et 25 mm, de préférence entre 15 et 20 mm, et encore de préférence entre 16 et 18 mm, et **en ce que** le diamètre (Dr) de la zone de section rétrécie (R) du dispositif venturi (V) est compris entre 1 et 20 mm.

4. Dispositif selon l'une quelconque des revendications 1 à 3, **caractérisé en ce que** :
- l'ensemble (2) de production d'un flux de gaz chaud sous pression comprend une soufflante (18), pourvue d'une entrée d'aspiration de gaz et d'une sortie (19) de refoulement de gaz sous pression, et un organe de chauffage (11) du gaz sous pression, présentant une entrée de gaz froid raccordée à la sortie de refoulement (19) du ventilateur (18), et une sortie constituant la sortie de gaz chaud (10),
- le débit de la soufflante (18) varie entre 20 et 100 Nm³/h, de préférence entre 40 et 70 Nm³/h, étant par exemple égale à 60Nm³/h,
- la soufflante (18) présente entre le refoulement et l'aspiration une différence de pression comprise entre 0,1 10⁵ Pa et 1 10⁵ Pa, de préférence comprise entre 0,2 10⁵ Pa et 0,5 10⁵ Pa, et
- l'organe de chauffage (11) permet de chauffer le flux de gaz à une température comprise entre 400 et 700°C, de préférence entre 450 et 650°C, mieux entre 500 et 600°C, à l'entrée du conduit d'éjection (3).

5. Dispositif selon l'une quelconque des revendications précédentes, **caractérisé en ce que** le conduit d'éjection (3) comporte une partie évasée (E) en aval du dispositif venturi (V), la partie évasée (E) comportant un divergent (13), la zone de section rétrécie (R)du dispositif venturi (V) présentant un diamètre (Dr) compris entre 1 et 20 mm, le divergent (13) ayant une sortie de diamètre (De) compris entre 15 et 250 mm.

6. Dispositif selon l'une quelconque des revendications précédentes, **caractérisé en ce que** qu'il comporte en outre :
- une sonde (15) pour détecter une interruption totale ou partielle du flux dosé de liquide injecté dans le conduit d'éjection (3) à partir de la première source de liquide (4),
- une seconde source de liquide (16),
- des moyens (17) pour injecter dans le conduit d'éjection (3) un flux de secours de liquide à partir de la seconde source de liquide (16) quand la sonde (15) détecte une interruption totale ou partielle du flux dosé de liquide injecté dans le conduit d'éjection (3) à partir de la première source de liquide (4), les moyens (17) comportant un organe à vanne, notamment une vanne tout ou rien, apte à sélectivement raccorder l'entrée (9) d'aspiration de liquide du dispositif venturi (V) à la seconde source (16) de liquide.

7. Dispositif selon la revendication 6, **caractérisé en ce que** la sonde (15) est une sonde de température (15) apte à mesurer la température courante du gaz dans le conduit d'éjection (3) en aval de l'entrée de liquide (9) et **en ce que** le dispositif comporte un calculateur (25) apte à recueillir la température courante du gaz mesurée par la sonde (15), à comparer cette température courante avec une valeur maximale prédéterminée, et à commander automatiquement à l'organe à vanne (7) de se fermer au moins partiellement lorsque la température mesurée par la sonde (15) est inférieure à la température prédéterminée, et de s'ouvrir au moins partiellement lorsque la température mesurée par la sonde (15) est supérieure à la température prédéterminée.

8. Dispositif selon la revendication 6 ou 7, **caractérisé en ce que** la seconde source de liquide (16) est un réservoir d'eau sensiblement étanche à l'air, les moyens (17) pour injecter dans le conduit d'éjection (3) un flux de secours de liquide à partir de la seconde source de liquide (16) comprenant un conduit de mis sous pression (29) raccordant la sortie de refoulement (19) de la soufflante (18) à un ciel (35) de la seconde source de liquide (16), et un conduit d'injection (31) raccordant la seconde source de liquide (16) à une entrée de liquide (32) débouchant dans le dispositif venturi (V) du conduit d'éjection (3).

9. Procédé de thermonébulisation d'un liquide, ce procédé comportant les étapes suivantes :
- créer un courant de gaz chaud sous pression,
- injecter à partir d'une première source de liquide (4) un flux dosé de liquide dans le courant de gaz chaud sous pression par aspiration du liquide au moyen d'un dispositif venturi (V) ayant une zone de section rétrécie (R), par des moyens (5) comportant un conduit d'aspiration (6), une vanne (7) et un conduit de prélèvement (8), le conduit d'aspiration (6) raccordant une première sortie de la vanne (7) à une entrée de liquide (9) débouchant dans la zone de section rétrécie (R) du dispositif Venturi (V) et le conduit de prélèvement (8) raccordant une seconde sortie de la vanne (7) à la première source de liquide (4) ;
- mesurer la température courante des gaz ;
- ouvrir ou fermer au moins partiellement la vanne (7) en cas respectivement de dépassement ou de baisse de la température mesurée par rapport à une température prédéterminée souhaitée.

## Patentansprüche

1. Vorrichtung (1) zur thermischen Vernebelung einer Flüssigkeit, wobei die Vorrichtung umfasst:
- eine Anordnung (2) zur Erzeugung eines warmen unter Druck stehenden Gasstroms, die einen Auslass (10) für heißes Gas aufweist,
- einen Ausstoßkanal (3), der einen an den Auslass (10) für warmes Gas der Anordnung (2) zur Erzeugung angeschlossenen Einlass für warmes Gas, und einen Auslass (12) zum Ausstoßen eines Flüssigkeitsnebels aufweist,
- eine erste Flüssigkeitsquelle (4),
- Mittel (5) zum Einspritzen eines dosierten Flüssigkeitsstroms aus der ersten Flüssigkeitsquelle (4) in den Ausstoßkanal (3), wobei die Mittel (5) zum Liefern des dosierten Flüssigkeitsstroms an den Ausstoßkanal (3) einen Ansaugkanal (6), ein Ventil (7) und einen Entnahmekanal (8) aufweisen,
**dadurch gekennzeichnet, dass** die Mittel (5) zum Einspritzen des dosierten Flüssigkeitsstroms eine Venturivorrichtung (V) aufweist, die eine Zone mit verengtem Querschnitt (R) aufweist, die das Ansaugen des dosierten Flüssigkeitsstroms gestattet, wobei der Ansaugkanal (6) einen ersten Ausgang des Ventils (7) an einen Flüssigkeitseinlass (9) anschließt, der in die Zone mit verengtem Querschnitt (R) der Venturivorrichtung (V) mündet, und der Entnahmekanal (8) einen zweiten Ausgang des Ventils an die erste Flüssigkeitsquelle (4) anschließt, wobei die Vorrichtung zur thermischen Vernebelung einen Temperatursensor (15), der geeignet ist die laufende Temperatur der Gase in dem Ausstoßkanal (3) zu messen, und einen Rechner (25) umfasst, der geeignet ist, die laufende von dem Sensor (15) gemessene Temperatur der Gase zu empfangen und automatisch das Öffnen oder das Schließen des Ventils (7) zumindest teilweise im jeweiligen Falle des Überschreitens oder Unterschreitens der von dem Sensor (15) gemessenen Temperatur in Bezug auf eine gewünschte vorbestimmte Temperatur zu steuern.

2. Vorrichtung nach Anspruch 1, **dadurch gekennzeichnet, dass** die Venturivorrichtung (V) einen konvergierenden Bereich (A) stromaufwärts zu der Zone (R) mit verengtem Querschnitt und einen divergierenden Bereich (B) stromabwärts zur Zone (R) mit verengtem Querschnitt aufweist, wobei die Zirkulation des warmen Gasstroms in dem Ausstoßkanal (3) berücksichtigt ist.

3. Vorrichtung nach Anspruch 1 oder 2, **dadurch gekennzeichnet, dass** der Durchmesser (D) des Ausstoßkanals (3) stromaufwärts zu der Venturivorrichtung (V) zwischen 12 und 25 mm, vorzugsweise zwischen 15 und 20 mm und noch bevorzugter zwischen 16 und 18 mm liegt, und dass der Durchmesser (Dr) der Zone (R) mit verengtem Querschnitt der Venturivorrichtung (V) zwischen 1 und 20 mm liegt.

4. Vorrichtung nach einem beliebigen der Ansprüche 1 bis 3, **dadurch gekennzeichnet, dass**:
- die Anordnung (2) zur Erzeugung des unter Druck stehenden warmen Gasstroms ein Gebläse (18), das mit einem Einlass zum Ansaugen von Gas und einem Auslass (19) zur Fördern des unter Druck stehenden Gases versehen ist, und ein Heizvorrichtung (11) für das unter Druck stehenden Gases umfasst, die einen Einlass für kaltes Gas, der mit dem Förderauslass (19) des Ventilators (18) verbunden ist, und einen Auslass aufweist, der den Auslass (10) des warmen Gases bildet,
- die Durchflussrate des Gebläses (18) zwischen 20 und 100 Nm³/h, vorzugsweise zwischen 40 und 70 Nm³/h variiert, beispielsweise gleich 60 Nm³/h ist,
- das Gebläse (18) zwischen dem Fördern und dem Ansaugen eine Druckdifferenz zwischen 0,1 10⁵ Pa und 1 10⁵ Pa, vorzugsweise zwischen 0,2 10⁵ Pa und 0,5 10⁵ Pa aufweist, und
- die Heizvorrichtung (11) das Aufheizen des Gasstroms auf eine Temperatur zwischen 400 und 700°C, vorzugsweise zwischen 450 und 650°C, besser zwischen 500 und 600°C, am Einlass des Ausstoßkanals (3) gestattet.

5. Vorrichtung nach einem beliebigen der vorhergehenden Ansprüche, **dadurch gekennzeichnet, dass** der Ausstoßkanal (3) einen aufgeweiteten Bereich (E) stromabwärts zur Venturivorrichtung (V) aufweist, wobei der aufgeweitete Bereich (E) einen divergierenden Bereich (13) aufweist, die Zone (R) mit verengtem Querschnitt der Venturivorrichtung (V) einen Durchmesser (Dr) zwischen 1 und 20 mm aufweist, das divergierende Teil (13) einen Auslass des Durchmessers (De) zwischen 15 und 250 mm hat.

6. Vorrichtung nach einem beliebigen der vorhergehenden Ansprüche, **dadurch gekennzeichnet, dass** sie außerdem umfasst:
- einen Sensor (15) zum Detektieren einer totalen oder teilweisen Unterbrechung des dosierten Flüssigkeitsstroms, der in den Ausstoßkanal (3) aus der ersten Flüssigkeitsquelle (4) eingespritzt wird,
- eine zweite Flüssigkeitsquelle (16),
- Mittel (17) zum Einspritzen eines Flüssigkeitshilfsstroms aus der zweiten Flüssigkeitsquelle (16) in den Ausstoßkanal (3), wenn der Sensor (15) eine teilweise oder vollständige Unterbrechung des in den Ausstoßkanal (3) aus der ersten Flüssigkeitsquelle (4) eingespritzten dosierten Flüssigkeitsstroms detektiert, wobei die Mittel (17) ein Ventilelement, insbesondere ein Auf/Zu-Ventil aufweisen, das in der Lage ist, selektiv den Einlass (9) zum Ansaugen der Flüssigkeit der Venturivorrichtung (V) an die zweite Flüssigkeitsquelle (16) anzuschließen.

7. Vorrichtung nach Anspruch 6, **dadurch gekennzeichnet, dass** der Sensor (15) ein Temperatursensor (15) ist, der geeignet ist, die laufende Temperatur des Gases in dem Ausstoßkanal (3) stromabwärts zum Flüssigkeitseinlass zu messen, und dass die Vorrichtung einen Rechner (25) umfasst, der geeignet ist, die von dem Sensor (15) gemessene laufende Temperatur des Gases zu erhalten, diese laufende Temperatur mit einem vorbestimmten maximalen Wert zu vergleichen und auto-matisch dem Ventilelement (7) zu befehlen, sich zumindest teilweise zu schließen, wenn die von dem Sensor (15) gemessene Temperatur kleiner als die vorbestimmte Temperatur ist, und sich zumindest teilweise zu öffnen, wenn die von dem Sensor (15) gemessene Temperatur größer als die vorbestimmte Temperatur ist.

8. Vorrichtung nach Anspruch 6 oder 7, **dadurch gekennzeichnet, dass** die zweite Flüssigkeitsquelle (16) ein im Wesentlichen luftdichter Wasserbehälter ist, wobei die Mittel (17) zum Einspritzen eines Flüssigkeitshilfsstroms aus der zweiten Flüssigkeitsquelle (16) in den Ausstoßkanal (3) einen unter Druck zu setzenden Kanal (29), der den Förderauslass (19) des Gebläses (18) an einen Kopfraum (35) der zweiten Flüssigkeitsquelle (16) anschließt, und einen Injektionskanal (31) umfasst, der die zweite Flüssigkeitsquelle (16) mit einem Flüssigkeitseinlass (32) verbindet, der in die Venturivorrichtung (V) des Ausstoßkanals (3) mündet.

9. Verfahren zur thermischen Vernebelung einer Flüssigkeit, wobei dieses Verfahren die folgenden Schritte umfasst:
- Erzeugen eines unter Druck stehenden warmen Gasstroms,
- aus einer ersten Flüssigkeitsquelle (4) einen dosierten Flüssigkeitsstrom in den warmen unter Druck stehenden Gasstrom durch Ansaugen der Flüssigkeit mittels einer Venturivorrichtung (V) einzuspritzen, die eine Zone (R) verengten Querschnitts aufweist, über Mittel (5), die einen Ansaugkanal (6), ein Ventil (7) und einen Entnahmekanal (8) aufweisen, wobei der Ansaugkanal (6) einen ersten Ausgang des Ventils (7) an einen Flüssigkeitseinlass (9) anschließt, der in die Zone (R) verengten Querschnitts der Venturivorrichtung (V) mündet, und der Entnahmekanal (8) einen zweiten Ausgang des Ventils (7) an die erste Flüssigkeitsquelle (4) anschließt;
- Messen der laufenden Temperatur des Gases;
- Öffnen oder Schließen des Ventils (7) zumindest teilweise jeweils im Falle des Überschreitens oder Unterschreitens der gemessenen Temperatur in Bezug auf eine vorbestimmte gewünschte Temperatur.

## Claims

1. Device (1) for hot fogging using a liquid, the device comprising:
- an assembly (2) for producing a pressurised hot gas flow, having in particular a hot gas outlet (10),
- an ejection pipe (3), having a hot gas inlet connected to the hot gas outlet (10) of the production assembly (2), and an ejection outlet (12) for a liquid spray mist,
- a first liquid source (4),
- means (5) for injecting into the ejection pipe (3) a metered liquid flow from the first liquid source (4), the means (5) for injecting the metered flow of liquid comprising a venturi device (V) having a narrow cross section area (R) so as to enable the suction of the metered liquid flow,
**characterised in that** the means (5) for supplying the metered liquid flow to the ejection pipe (3) comprise a suction pipe (6), a valve (7), and an extraction pipe (8), the suction pipe (6) connecting a first outlet of the valve (7) to a liquid inlet (9) opening into the narrow cross section area (R) of the venturi device (V) and the extraction pipe (8) connecting a second outlet of the valve to the first liquid source (4), the thermal fogging device comprising in addition one temperature sensor probe (15) suitable for measuring the current temperature of the gases in the ejection pipe (3) and a computer (25) suitable for collecting the current temperature of the gas measured by the sensor probe (15) and automatically controlling the opening or closing at least partially of the valve (7) respectively in the event of the temperature measured by the sensor probe (15) exceeding or dropping below the level with respect to a predetermined desired temperature.

2. Device according to Claim 1, **characterised in that** the venturi device (V) includes a convergent section (A) upstream of the narrow cross section area (R) and a divergent section (B) downstream from the narrow cross section area (R), when considering the direction of flow of the stream of hot gas in the ejection pipe (3).

3. Device according to Claim 1 or 2, **characterised in that** the diameter (D) of the ejection pipe (3) upstream of the venturi device (V) is between 12 mm and 25 mm, preferably between 15 mm and 20 mm, and even more preferably between 16 mm and 18 mm, and **in that** the diameter (Dr) of the narrow cross section area (R) of the venturi device (V) is between 1 mm and 20 mm.

4. Device according to any one of claims 1 to 3, **characterised in that**:
- the assembly (2) for producing a pressurised hot gas flow comprises a blower (18), provided with a gas suction inlet and a pressurised gas discharge outlet (19) and a heating device (11) for the pressurised gas, having a cold gas inlet connected to the discharge outlet (19) of the blower (18), and an outlet constituting the hot gas outlet (10),
- the flow rate of the blower (18) varies between 20 Nm³/h and 100 Nm³/h, preferably between 40 Nm³/h and 70 Nm³/h, for example being equal to 60 Nm³/h,
- the blower (18) has a pressure difference between discharge and suction of between 0.1 10⁵ Pa and 1 10⁵ Pa, preferably between 0.2 10⁵ Pa and 0.5 10⁵ Pa, and
- the heating device (11) heats the gas stream at a temperature between 400 and 700 ° C. , preferably between 450 and 650 ° C, preferably between 500 and 600 ° C, at the entrance of the ejection pipe (3).

5. Device according to any one of the preceding claims, **characterised in that** the ejection pipe (3) has a flared portion (E) downstream from the venturi device (V), the flared portion (E) includes a divergent section (13), the narrow cross section area (R) of the venturi device (V) having a diameter (Dr) of between 1 mm and 20 mm, the divergent section (13) having an outlet diameter (De) of between 15 mm and 250 mm.

6. Device according to any one of the preceding claims, **characterised in that** it further comprises:
- a sensor probe (15) for detecting a total or partial interruption of the flow of metered liquid injected into the ejection pipe (3) from the first liquid source (4),
- a second liquid source (16),
- the means (17) for injecting into the ejection pipe (3) an emergency flow of liquid from the second liquid source (16) when the sensor probe (15) detects a total or partial interruption of the flow of metered liquid injected into the ejection pipe (3) from the first liquid source (4), the means (17) comprising a valve member, in particular an on-off valve, capable of selectively connecting the liquid suction inlet (9) of the venturi device (V) to the second liquid source (16).

7. Device according to claim 6, **characterised in that** the sensor probe (15) is a temperature sensor probe (15) suitable for measuring the current temperature of the gas in the ejection pipe (3) downstream from the liquid inlet (9) and **in that** the device comprises a computer (25) suitable for collecting the current temperature of the gas measured by the sensor probe (15), and able to compare this current temperature with a predetermined maximum value, and to automatically command the valve member (7) to at least partially close when the temperature measured by the sensor probe (15) is lower than the predetermined temperature, and to open at least partially when the temperature measured by the sensor probe (15) is higher than the predetermined temperature.

8. Device according to claim 6 or 7, **characterised in that** the second liquid source (16) is a water tank substantially sealed to be air tight, the means (17) for injecting into the ejection pipe (3) an emergency flow of liquid from the second liquid (16) comprising a pressurised pipe (29) connecting the discharge outlet (19) of the blower (18) to a crown (35) of the second liquid source (16) and an injection pipe (31) connecting the second liquid source (16) to a liquid inlet (32) opening into the venturi device (V) of the ejection pipe (3).

9. Method of thermal fogging using a liquid, said method comprising the following steps:
- creating a current of pressurised hot gas,
- injecting a metered flow of liquid into the current of pressurised hot gas by suction of the liquid by a venturi device (V) having a narrow cross section area (R), by means (5) comprising a suction pipe (6), a valve (7), and an extraction pipe (8), the suction pipe (6) connecting a first outlet of the valve (7) to a liquid inlet (9) opening into the narrow cross section area (R) of the venturi device (V) and the extraction pipe (8) connecting a second outlet of the valve to the first liquid source (4),
- measuring the current temperature of the gas
- opening or closing at least partially of the valve (7) respectively in the event of the temperature measured exceeding or dropping below the level with respect to a predetermined desired temperature.
